# EUROPEAN PATENT SPECIFICATION

(11) **EP 2 637 150 B1**
(45) Date of publication and mention of the grant of the patent: **01.04.2015**
(21) Application number: 13155832.2
(22) Date of filing: 19.02.2013
(51) Int. Cl.: G08G 1/16, G06T 7/20

(54) **Vehicle peripheral area observation system**
System zur Beobachtung des Fahrzeugumfelds
Système d'observation de la zone périphérique d'un véhicule

(30) Priority: 07.03.2012 JP 2012050908
(43) Date of publication of application: 11.09.2013
(73) Proprietor: Clarion Co., Ltd., Saitama 330-0081 (JP)
(72) Inventor: Kiyohara, Masahiro, Tokyo 100-8220 (JP); Uchida, Yoshitaka, Saitama 330-0081 (JP); Muramatsu, Shoji, Chiyoda-ku, Tokyo 100-8220 (JP); Irie, Kota, Ibaraki 312-8503 (JP)
(74) Representative: MERH-IP Matias Erny Reichl Hoffmann

(56) References cited:
- EP-A1- 2 464 112
- EP-A2- 1 962 254
- GB-A- 2 282 294

## Description

### BACKGROUND

### 1. Technical Field

The present invention relates to a vehicle peripheral area observation system that detects, from images of the peripheral area of a vehicle captured with an on-vehicle camera, a pedestrian who has a possibility of approaching the vehicle.

### 2. Background Art

So far, a system has been conceived that has one or more cameras mounted on a moving object such as a vehicle and that prevents an accident by recognizing an obstacle present in an environment around the vehicle and notifying a driver of the presence of the obstacle as needed. For example, a technology of calculating optical flows from a plurality of images captured at different timings and merging motions between the images at corresponding points to calculate a motion between the images has been developed. An image processing device that recognizes a moving object such as a pedestrian or a bicycle by calculating such a motion between the images is known.

For example, Patent Document 1 describes a technology of calculating optical flows for respective regions set in images, and recognizing a movement of another vehicle on the basis of an optical flow that is greater than or equal to a preset threshold among the optical flows in the respective regions.

Patent Document 1: JP Patent Publication (Kokai) No. 6-314340A

EP 2 464 112 A1 describes a vehicle surroundings awareness support device. Captured images comprising a plurality of frames taken sequentially by an onboard camera for imaging the surrounding of the vehicle are received; an optical flow is computed on the basis of feature points contained in the plurality of frames imaged at different times; moving objects in the surroundings of the vehicle are detected on the basis of the optical flow.

EP 1 962 254 A2 describes an in-vehicle running-environment recognition apparatus including an input unit for inputting an image signal from in-vehicle imaging devices for photographing external environment of a vehicle, an image processing unit for detecting a first image area by processing the image signal, the first image area having a factor which prevents recognition of the external environment.

GB 2 282 294 A describes a method which is used for optically detecting moving objects.

### SUMMARY

However, as an optical flow is influenced by even a local apparent motion between the images, an erroneous optical flow can be measured in a circumstance in which the luminance value other than that of a moving object such as a pedestrian changes from moment to moment.

Such a circumstance can occur when, for example, water vapor contained in an exhaust gas is rising up from a muffler of a vehicle in an outdoor environment where the ambient temperature is low or when a change in the shade due to a direction indicator or a head light is reflected in the road surface. That is, there has been a problem that even if there is no obstacle in the three-dimensional space, an erroneous optical flow can be measured in a circumstance in which the luminance value changes with time.

With respect to the vehicle peripheral area observation system described in Reference 1, the presence of another vehicle is recognized when an optical flow is greater than or equal to a predetermined threshold. Thus, there is a possibility that when an erroneous optical flow is measured as described above, the presence of another vehicle may be erroneously recognized though such a vehicle is not actually present.

The above described problem is solved by the invention according to claim 1. Further preferred developments are described by the dependent claims. The present invention has been made in view of the foregoing, and provides a vehicle peripheral area observation system capable of accurately and easily detecting a moving object that has a possibility of hitting against the vehicle by avoiding an erroneous recognition that would otherwise occur due to an apparent motion between images.

In order to solve the aforementioned problems, according to an aspect of a vehicle peripheral area observation system of the present invention, a moving object is detected on the basis of a plurality of images captured with an on-vehicle camera at predetermined time intervals, and it is determined if the moving object results from detection of an apparent motion on the basis of motion information of the moving object and luminance information. Then, a region in which the moving object determined to result from detection of the apparent motion is present is masked, so that warning control in accordance with a result of detection of a moving object is performed.

According to the present invention, when a moving object results from detection of an apparent motion, warning control is performed by masking a region in which such a moving object is present. Thus, it is possible to prevent, when detecting a moving object that has a possibility of hitting against a vehicle or a pedestrian, an error detection due to an apparent motion resulting from water vapor, a lighting device, and the like. Other problems, configurations, and advantages will become apparent from the following description of embodiments.

### BRIEF DESCRIPTION OF THE DRAWINGS

FIG. 1 is a functional block diagram of a vehicle peripheral area observation system in accordance with this embodiment;
FIG. 2 is a diagram illustrating an exemplary configuration of a vehicle peripheral area observation system;
FIG. 3 is a flowchart illustrating processes performed by a vehicle peripheral area observation system;
FIG. 4 is a diagram representing a view in which water vapor is observed with a rear camera;
FIG. 5 is a diagram representing a video obtained when water vapor is observed with a rear camera;
FIG. 6 is a diagram representing a view in which illumination by direction indicators is observed with a rear camera;
FIG. 7 is a diagram representing a video obtained when illumination by direction indicators is observed with a rear camera;
FIG. 8 is a diagram representing a view in which illumination by headlights is observed with a front camera;
FIG. 9 is a diagram representing a video obtained when illumination by headlights is observed with a front camera;
FIG. 10 is a diagram illustrating another exemplary configuration of a vehicle peripheral area observation system;
FIG. 11 is a diagram illustrating another exemplary configuration of a vehicle peripheral area observation system;
FIG. 12 is a diagram illustrating another exemplary configuration of a vehicle peripheral area observation system;
FIG. 13 is a functional block diagram illustrating another exemplary configuration of a vehicle peripheral area observation system; and
FIG. 14 is a functional block diagram illustrating an appearance determination unit.

### DETAILED DESCRIPTION

### [First Embodiment]

Hereinafter, a first embodiment will be described.

A primary object of a vehicle peripheral area observation system in accordance with this embodiment is to provide a user-friendly vehicle peripheral area observation system that, by detecting a region of an apparent motion due to water vapor or a light source fluctuation, invalidates a result of detection of a moving object in the region and suppresses error warnings that would otherwise be output due to the apparent motion.

The vehicle peripheral area observation system, in order to detect a moving object around a vehicle, calculates optical flows between images captured with an on-vehicle camera at preset time intervals, and if a given number or more of pixels having flows in an identical direction aggregate, outputs information on the pixels as a moving object.

Water vapor that can be a cause of an error warning has the following characteristics (1) to (5): (1) the contrast is low in the daytime; (2) when the water vapor is illuminated by headlights or direction indicators of the vehicle or another vehicle in the night, the luminance becomes high and reaches a luminance value around the upper limit of the output range of an image sensor; (3) the water vapor rises up from a muffler and diffuses, and then flows under the influence of the wind; (4) movements of optical flows in the water vapor are unstable; and (5) when given conditions of the ambient temperature and humidity are satisfied, the water vapor is continuously generated within a given range. Note that the term "contrast" herein refers to, with respect to the luminance values of pixels included in a given image range, the difference between the maximum luminance value and the minimum luminance value.

In the vehicle peripheral area observation system, conditions such as the ambient temperature and the engine temperature are determined with on-vehicle sensors to determine if water vapor is likely to be erroneously detected as a moving object. If there is a possibility that an erroneous detection may occur, a motion region is extracted using optical flows. Then, a luminance value threshold at which water vapor is likely to be observed depending on hours of a day is set, and the set threshold is used to perform contrast determination in the extracted motion region. When the contrast is determined to be similar to that of water vapor, masking is performed so that a moving object that has started to be detected in the region is not noticed only for a given period of time.

Water vapor in the daytime, for example, is often observed as white smoke in a hazy light color and at a low contrast. Thus, when the current time of day is determined to be the daytime in the determination of night or day, if the luminance value of a region, which is determined to contain an apparent motion from optical flows, continuously and irregularly fluctuates for a given period of time or more, and the contrast in a local region is determined to be lower than a given value, such a region is determined to be a region where an image of water vapor has been captured. Thus, a process is performed in which, even if an optical flow appears in the region, notification is suppressed only for a given period of time.

Water vapor in the night is, when not illuminated with light, difficult to see to an extent that an optical flow is not detected. However, when water vapor is illuminated by headlights or direction indicators of the vehicle or another vehicle or from street lights, for example, the water vapor often has a high luminance value that is close to the upper limit of the luminance value. Thus, when the current time of day is determined to be the night in the determination of night or day, if pixels whose luminance values in a region, which has been determined to contain an apparent motion from optical flows, are within 10 % of the upper limit of the possible luminance value range occupy a predetermined area or more, the region is determined to be a water vapor region, and notification is suppressed only for a given period of time even if an optical flow appears in the region.

Meanwhile, when a headlight or a direction indicator blinks, a high luminance region appears on the image as a result of a road surface or wall being illuminated with light rays. As a change in the intensity of a light source is slow as compared to the image capturing period (cycle) of a camera, the boundary of the high luminance region apparently moves, so that an optical flow is observed.

Thus, when it is found that a lighting device of a vehicle is on by an illumination sensor that indicates the blinking state of lighting devices such as headlights, direction indicators, fog lamps, backup lights, width indicators, tail lights, or a license-plate light, or a lighting control device for the lighting devices, and a high luminance region whose luminance values are within 10 % of the upper limit of the possible luminance value range exists around the optical flow region, notification using the optical flows observed around the high luminance region is suppressed.

Further, with regard to a periodically blinking light such as a direction indicator, the period is observed, so that the presence of a region that is influenced by the blinking of the direction indictor of the vehicle or another vehicle is detected, and a result of detection of a moving object in the region is invalidated, so that error warnings that would otherwise be output due to the apparent motion are suppressed.

Although the above example illustrates, as a high luminance region, pixels with luminance values that are within 10 % of the upper limit of the possible luminance value range, as a typical camera has a built-in auto gain function, which is a mechanism of adjusting the diaphragm or the shutter speed according to the luminance of the surrounding, and a built-in function of correcting the color or luminance in performing A/D conversion on a camera video and taking the converted video into image memory, it is also possible to provide a configuration in which a luminance value range that is determined to be a high luminance region is adjusted in conjunction with such setting values.

In the vehicle peripheral area observation system, it is also possible to determine the presence of reflectance of light from a lighting device or the presence of water vapor using a variance of the directions of flow vectors in pixels measured from optical flows. It is also possible to, by supposing the position and magnitude of water vapor that appears on the screen under the condition that there is no wind taking into consideration the exhaust gas capacity and the muffler position of the vehicle, calculate the mean and variance of luminance values in a region with a corresponding size and determine the presence of a low contrast condition. Meanwhile, it is also possible to, when the presence of a light reflectance region due to a lighting device or a water vapor region is determined, assume the region as a non-notification target region only for a given period of time, and to, when the presence of a light reflectance region due to a lighting device or a water vapor region is determined again during the non-notification target time, update the time so that the region becomes a non-notification target region for a further given period of time from the determined time point.

### [Embodiment 1]

Next, an embodiment of a vehicle peripheral area observation system 100 will be described with reference to the drawings. This embodiment concerns the vehicle peripheral area observation system 100 in which an image of the peripheral area of a vehicle is captured with an on-vehicle camera 111, and, when a moving object that has a possibility of hitting against the vehicle 120 is detected, a warning is output.

First, terms used in the following description will be defined. A motion vector representing the amount of movement between image coordinates calculated from two images, which have been captured with an imaging device at different time points, will be referred to as an optical flow.

There are cases where, even when an object has not actually moved, optical flows are calculated as the shape of the object changes from moment to moment like water vapor. There are also cases where, when a light source illumination environment of a vehicle, another vehicle, or an object other than vehicles fluctuates, optical flows are calculated even if the object has not actually moved, as a gradation on the image, a boundary region between an illuminated region and a non-illuminated region, and the like change. Such a motion that occurs due to a change in the appearance in the image will be hereinafter referred to as an "apparent motion." Meanwhile, a relative movement amount of a moving object such as a human or a vehicle with respect to the image capturing view point on the world coordinate system that is a real environment will be hereinafter referred to as a "target movement amount."

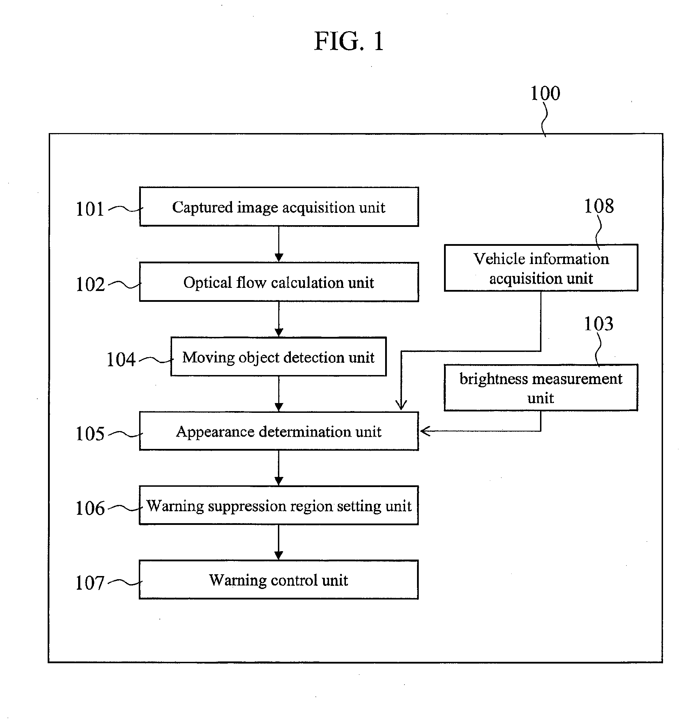

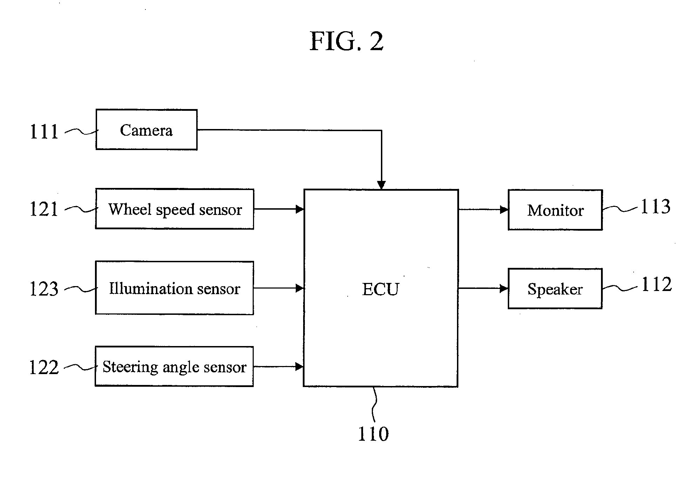

FIG. 1 is a diagram showing the configuration of a vehicle peripheral area observation system in accordance with this embodiment, and FIG. 2 is a diagram illustrating an exemplary configuration of a vehicle peripheral area observation system.

The vehicle peripheral area observation system 100 is adapted to observe if a pedestrian is moving in a direction approaching a vehicle. As shown in FIG. 2, the vehicle peripheral area observation system 100 is configured in an ECU 110 for image processing, for example. An on-vehicle camera 111 for observing the peripheral area of the vehicle such as an area in the front or rear of the vehicle, a wheel speed sensor 121 that obtains the rotation speed of each wheel of the vehicle, a steering angle sensor 122 that obtains the rotation angle of a steering wheel, and an illumination sensor 123 for obtaining the on-state of lighting devices such as headlights or direction indicators of the vehicle are connected to the input of the ECU 110, while a speaker 112 for outputting a warning sound and a monitor 113 for displaying a target of the warning sound are connected to the output of the ECU 110.

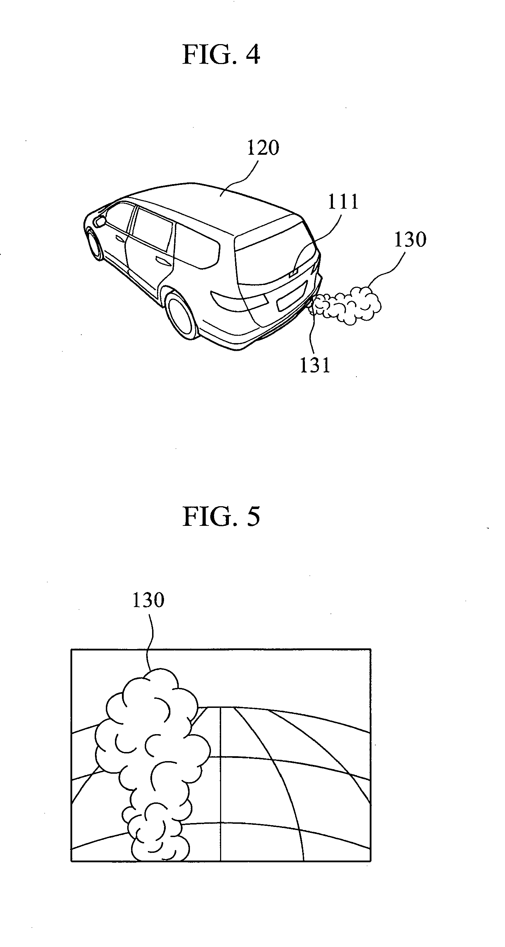

The on-vehicle camera 111 is a so-called monocular camera, and is installed in the vehicle 120 to capture an image of the peripheral area of the vehicle. The on-vehicle camera 111 is not limited to a rear camera that captures an image of an area in the rear of the vehicle such as the one shown in FIG. 4, and may be one or both of a front camera that captures an image of an area in front of the vehicle and a side camera that captures an image of a side of the vehicle.

The vehicle peripheral area observation system 100 need not be configured within the ECU 110 for image processing, and may be configured in a dedicated ECU or another on-vehicle ECU such as an ECU of the on-vehicle camera 111, or be configured by a combination of a plurality of ECUs.

The vehicle peripheral area observation system 100 includes, as shown in FIG. 1, a captured image acquisition unit 101, an optical flow calculation unit 102, a brightness measurement unit 103, a moving object detection unit 104, an appearance determination unit 105, a warning suppression region setting unit 106, a warning control unit 107, and a vehicle information acquisition unit 108.

The captured image acquisition unit 101 acquires a plurality of images 1 and 2 that have been captured with the on-vehicle camera 111 at preset time intervals. The optical flow calculation unit 102 calculates optical flows using the plurality of images acquired by the captured image acquisition unit 101. The brightness measurement unit 103 determines if an environment around the vehicle is light or dark on the basis of sensor device on the vehicle. The illumination sensor 123 acquires lighting information on vehicle lighting devices such as headlights or small lamps.

The moving object detection unit 104 detects a moving object on the basis of optical flows. The appearance determination unit 105 determines if the moving object results from detection of an apparent motion on the basis of the optical flows and the luminance of the image. The warning suppression region setting unit 106 masks a region in which a moving object, which has been determined to result from detection of an apparent motion, is present. The warning control unit 107 performs warning control on the basis of a result of detection of a moving object that is present in a moving object detection region other than the warning suppression region. The vehicle information acquisition unit 108 acquires as vehicle information information from the wheel speed sensor 121, the steering angle sensor 122, and the illumination sensor 123.

Next, each configuration of the vehicle peripheral area observation system 100 will be described in detail.

The on-vehicle camera 111 is a device that amplifies, as electric charge, the light intensity of visible light or near infrared light, or far infrared light illuminated onto a light receiving element such as a CCD camera or a CMOS camera, for example, and outputs the amplified light.

In recent years, there has also been known a camera with a built-in storage device and processor so that, after an image is captured, a lens distortion is corrected within the camera and then an image is output. For an output signal, an analog signal or a digital signal is often used. In this embodiment, an example in which an analog signal is output will be described. The output video signal is subjected to A/D conversion by the captured image acquisition unit. At this time, if a mapping parameter between the voltage of A/D conversion and the luminance value is changed, it becomes possible to make a video of an identical signal more brighter or acquire the video with a lower luminance value and store it in memory.

Among the images stored in the memory as described above, two images captured at different time points, that is, an image 1 and an image 2 are used as inputs to calculate optical flows.

An optical flow is obtained by using as inputs two images captured at different time points, referred to as a reference image and a retrieved image. Specifically, to which region of the retrieved image an image patch in the reference image has high similarity is searched for, and an original image patch is regarded as having moved to the region with high similarity. Such a motion vector is referred to as a flow vector. By calculating a flow vector for each of a plurality of image patches, it is extracted if a region has moved between the two images.

The brightness measurement unit 103 determines if an environment around the vehicle is dark, or possibly in a dark condition using vehicle information such as lighting signals for the headlights, fog lamps, or the like, the illuminance sensor, and time information. Then, the brightness measurement unit 103 transmits the determination result to the appearance determination unit 105.

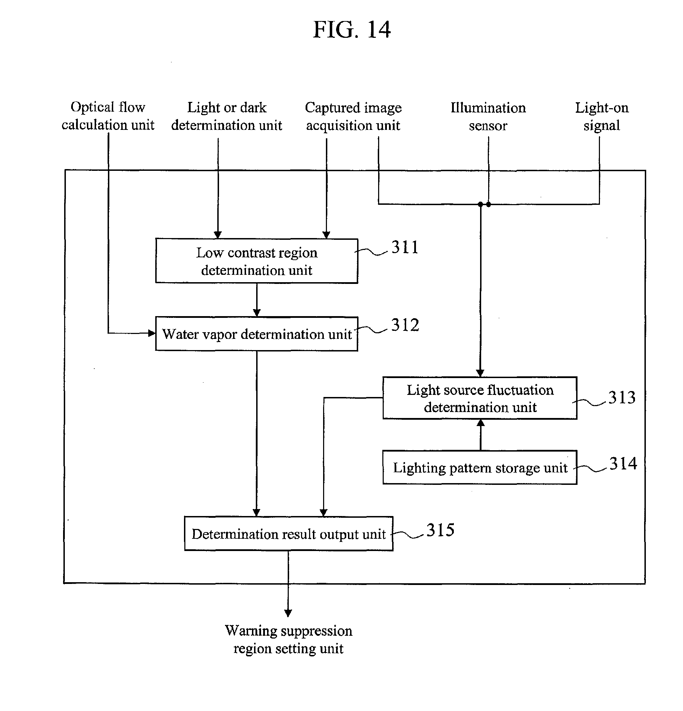

As shown in FIG. 14, the appearance determination unit 105 determines if an apparent motion due to water vapor or a light source fluctuation has been detected. The appearance determination unit 105 includes a low contrast region determination unit 311, a water vapor determination unit 312, and a light source fluctuation determination unit 313.

The low contrast region determination unit 311 calculates, for the images 1 and 2 acquired by the captured image acquisition unit 101, a fluctuation of at least one of the mean or variance of the luminance values of pixels included in a local region, and performs low contrast determination on the basis of brightness determination information.

The low contrast region determination unit 311 splits an image into image blocks in predetermined size, and calculates the mean and variance of the luminance values of the pixels in each block, and then switches a determination threshold depending on the determination result of the brightness measurement unit 103. For example, when the determination result shows that the current time of day is the daytime, thin water vapor, that is, water vapor that is not clearly visible is detected. Thus, a region with a low variance value is determined to be a low contrast region. Meanwhile, when the determination result shows that the current time of day is the night, water vapor that is illuminated and thus is light is detected. Thus, a region with a high mean value is determined to be a low contrast region.

The water vapor determination unit 312, on the basis of the results of the low contrast determination unit and the optical flow calculation unit 102, determines if the region is a region in which water vapor is generated. For example, when it is determined by the brightness measurement unit 103 that the current time of day is the night and optical flows are output only around a high luminance value region, the water vapor determination unit 312 restrictively determines that the region is a region in which water vapor is generated.

The light source fluctuation determination unit 313 determines, by determining if the luminance value of each local region in the image follows a predetermined pattern with the passage of time, if a light source fluctuation has been generated due to the blinking of the headlights or direction indicators.

For example, for turning on a headlight of a vehicle, an instruction to start to turn on the headlight via a CAN signal or a hard wire from a switch for turning on the headlight is used as a trigger, and a luminance value increase pattern, as a time series variation, for a period from when the light of the vehicle gradually becomes brighter to when the light becomes completely on is stored in a storage unit as previous knowledge.

Then, with respect to a change in the luminance value of each local region in the image, when a luminance value increase rate with reference to the luminance value prior to the receipt of the instruction to start to turn on the headlight becomes equal to the luminance value increase pattern within a predetermined threshold of a margin of error, it is determined that the headlight has been turned on.

As for the blinking of a direction indicator of a vehicle, it is also possible to determine if the direction indicator is blinking by storing in a storage unit, as previous knowledge, a luminance value increase pattern and a luminance value decrease pattern of the luminance values using instructions to turn on and turn off the direction indicator as triggers like the aforementioned example of the turning on of the headlight, and comparing the similarity to each of the patterns.

Note that with respect to the headlights or direction indicators of other vehicles, it is impossible to obtain the blinking timing as vehicle information. Thus, a time series variation is observed as follows, for example, to estimate the period of a periodic pattern and compare the similarity to the pattern.

In the case of a direction indicator, for example, the blinking period is determined to be 60 times or 120 times a minute, and a luminance change pattern for when the direction indicator is turned on and off is predetermined for each vehicle. For example, a direction indictor light is commercially available that, though it differs from vehicle to vehicle, gradually becomes bright after 200 milliseconds have elapsed after an instruction to start to turn on the light is sent to the light and electric current starts to flow through a lamp bulb; a state of the maximum brightness continues for 200 milliseconds; becomes completely dark after 160 milliseconds have elapsed after an instruction to turn off the light is sent to the light and supply of electric current to the light valve stops; and an off-state continues for 240 milliseconds.

From the luminance change pattern for when the light is turned on and off, a luminance change model is supposed that has, as parameters, a luminance increasing time t1, a maximum luminance duration time t2, a luminance dropping time t3, and a minimum luminance duration time t4. Then, the parameters and the timings of an instruction to turn on the light and an instruction to turn off the light are calculated from images acquired in a time series. Such timings can be determined by finding a luminance change of each local region in the images and the luminance change model using an existing method such as a least-squares method.

If the luminance change pattern and the timings of an instruction to turn on the light and an instruction to turn off the light can be calculated, it is possible to determine the presence or absence of a light source fluctuation due to the direction indicator by determining if the luminance change pattern and a luminance change obtained from the images are equal within a given margin of error like the aforementioned headlight. Then, if a light source fluctuation due to the direction indicator is determined to be present, it is determined that the moving object results from an apparent motion due to the light source fluctuation.

A determination result output unit 315 outputs a region that is determined to be a result of determination of at least one of the water vapor determination unit 312 or the light source fluctuation determination unit 313 to a warning suppression region setting unit.

The warning suppression region setting unit 106 holds the water vapor region output from the water vapor determination unit as a warning suppression region only for a given period of time, and adds, to a moving object newly detected in the region, information indicating that the moving object is newly detected in the warning suppression region during the period, and then notifies the warning control unit 107 that the detected moving object is an invalid moving object. Meanwhile, if it is determined that a light source fluctuation is present, the warning suppression region setting unit 106 sets the region as a warning suppression region, and adds, to a moving object newly detected in the region, information indicating that the moving object is newly detected in the warning suppression region, and then notifies the warning control unit 107 that the detected moving object is an invalid moving object.

Meanwhile, if a moving object, which has already been detected in a region outside the water vapor region or the light source fluctuation region, moves and enters the water vapor region or the light source fluctuation region, the warning suppression region setting unit 106 notifies the warning control unit 107 that a valid moving object, which is a warning target, is present. In addition, for a moving object newly detected in a region outside the water vapor region or the light source fluctuation region, the warning suppression region setting unit 106 newly notifies the warning control unit 107 that a valid moving object, which is a warning target, is present.

The warning control unit 107, on the basis of the results obtained by the optical flow calculation unit 102 and the warning suppression region setting unit 106, performs a process of noticing only a valid moving object. The warning control unit 107 controls a car navigation system installed in the vehicle and the monitor 113 and the speaker 112 of the display audio. The warning control unit 107 performs control of, on the output of a navigation screen (monitor), for example, displaying a warning display such that it is overlaid on the camera video or outputting a warning sound from the speaker for the user. In addition, the warning control unit 107 at least performs control of suppressing warning sounds as warning suppression control.

The vehicle peripheral area monitoring device 100 in accordance with this embodiment, with at least the aforementioned configuration, extracts optical flows from a plurality of images captured with the on-vehicle camera 111 at different time points, and, by determining if the optical flows overlap a region determined to be a water vapor region or a light source fluctuation region, switches whether to output a warning sound or not.

Next, cooperation between the ECU (Electric Control Unit) that executes the present process and its peripheral devices will be described with reference to FIG. 2.

The ECU 110 receives a video from the camera 111, and also receives sensor information from the wheel speed sensor 121 and the steering angle sensor 122 to calculate the behavior of the vehicle at that time. It is acceptable as long as such sensors are sensors used to calculate the behavior of the vehicle, such as a vehicle speed sensor, a wheel speed pulse sensor, a steering angle sensor, a steering angle power auxiliary device, a vehicle height sensor, a yaw rate sensor, a GPS sensor, and an acceleration sensor. In addition, the illumination sensor 123 is a sensor that indicates the states of lighting devices of the vehicle, and can determine a circumstance in which, for example, a headlight is shone as an environment in which the periphery of the vehicle is dark. Besides, an illumination sensor used for an automatic headlight lighting device and the like may also be used.

The ECU 110 displays a result of monitoring the peripheral area of the vehicle on the monitor 113, or outputs a warning sound from the speaker 112, for example, to warn a driver as needed.

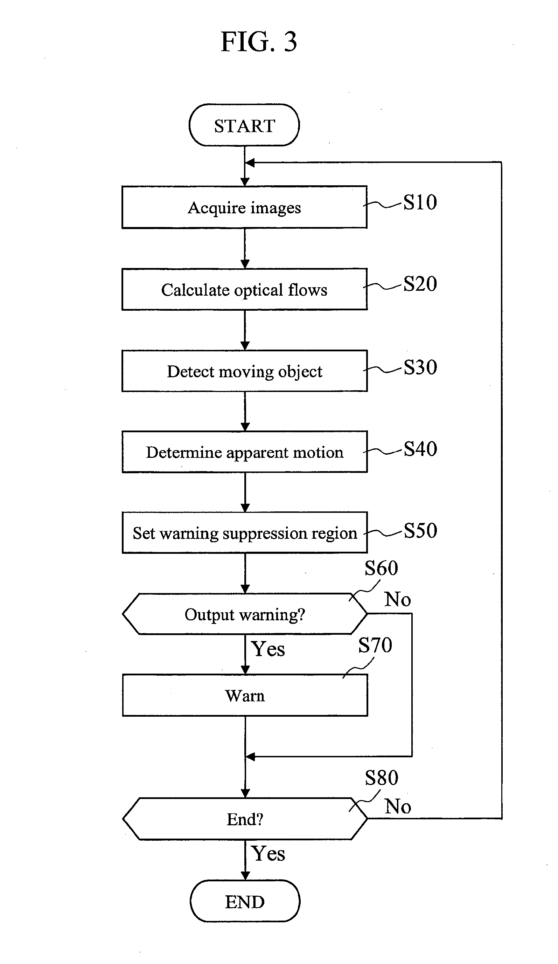

Processes performed by the vehicle peripheral area observation device with the aforementioned configuration will be described with reference to a flowchart in FIG. 3. First, in step S10, an image of the peripheral area of a vehicle, including water vapor and a road surface, is captured at least twice at predetermined time intervals to acquire two images 1 and 2, and then the process proceeds to step S20.

In step S20, optical flows are calculated from the two images 1 and 2 by the optical flow calculation unit 102, and then the process proceeds to step S30. In step S30, a moving object on the road surface is detected by the moving object detection unit 104, and then the process proceeds to step S40.

In step S40, if an apparent motion due to water vapor and a light source fluctuation is present is determined by the appearance determination unit 105. In step S50, a warning suppression region is set by the warning suppression region setting unit 106. In step S60, it is determined if a region in which a moving object is newly detected by the moving object detection unit 104 overlaps the warning suppression region. If it is determined that the newly detected moving object overlaps the warning suppression region, it is determined that the moving object is erroneously detected due to an apparent motion. Thus, no warning is output, and the process proceeds to step S80 (No path in FIG. 3). Meanwhile, if it is determined that the newly detected moving object does not overlap the warning suppression region, it is not determined that the moving object is erroneously detected due to an apparent motion, and thus the process proceeds to step S70 (Yes path in FIG. 3).

In step S70, a warning is output from the monitor 113 or the speaker 112 to warn a driver of the vehicle. Then, the process proceeds to step S80. In step S80, it is detected that an operation switch (not shown) for operating the peripheral area observation unit has been turned off or an ignition switch of the vehicle has been turned off, and it is thus determined that the process should be terminated. Otherwise, the process returns to step S 10 to repeat the same processes.

Next, the optical flow calculation process performed in step S20 will be specifically described.

Suppose that an image captured with the camera 111 at time t is It(x,y), and an image captured at time t + Δt is It + Δt(x,y). First, a point with a large luminance gradient is detected as a feature point from the image It(x,y). Specifically, for the image It(x,y), a small region is set around a target pixel, and an operator for determining an edge strength, as a quantity representing a luminance gradient, in the set small region is operated, so that a pixel with an edge strength that is greater than a predetermined value is determined to be a feature point. At this time, an edge direction in the same pixel is also calculated.

Next, the image It + Δt(x,y) is searched for a pixel (corresponding point) with the same luminance gradient as the feature point detected from the image It(x,y). This process is performed by setting a search range with a predetermined size in the image It + Δt(x,y) and searching for a pixel with the same luminance gradient (edge strength and edge direction) as the feature point detected from the image It(x,y).

Next, a threshold is provided for each of the degree of approximation of the edge strength and the degree of approximation of the edge direction, and when the difference in the edge strength and the difference in the edge direction are within the respective set thresholds, it is determined that a corresponding point is found. When a corresponding point is not retrieved, another feature point is detected.

Next, an optical flow is determined that has, as a starting point, the feature point detected from the image It(x,y) and has, as an end point, the corresponding point found from the image It + Δt(x,y). The position coordinates of the starting point and the position coordinates of the end point of the optical flow detected as described above are stored in the optical flow calculation unit.

The aforementioned feature point detection process is performed on all pixels in the image It(x,y). Note that the optical flow calculation method is not limited to the aforementioned example. That is, as a number of optical flow detection methods have been proposed, any of the known methods may be used.

The moving object detection process performed in step S30 will be described.

In the moving object detection process, the coordinates of the starting point, the coordinates of the end point, and the length of each flow obtained from the optical flow calculation result are read, and then the flow vectors are grouped. This process is intended to merge optical flows detected at close positions. Specifically, optical flows in a region with a preset size are compared, and if the lengths of the optical flows are greater than or equal to a predetermined value and the difference between the directions of the optical flows is less than or equal to a predetermined value, such optical flows are grouped. Such grouping is performed on all optical flow vectors on the image. Then, when the grouped optical flow has a predetermined size on the screen, it is determined as an object.

The apparent motion determination process performed in step S40 will be described with reference to FIGS. 4 and 5.

First, an example of detection of water vapor that is a type of an apparent motion is shown.

FIG. 4 shows an example in which water vapor 130 is detected with the on-vehicle camera 111. As water vapor of a vehicle is known to be generated from a portion around a muffler 131, it can be predicted that water vapor is generated from a position on the screen corresponding to the muffler position as knowledge of each vehicle.

The water vapor 130 is emitted and diffused from the muffler 131 of the vehicle, and is reflected in an image captured with the on-vehicle camera 111 as shown in FIG. 5. In the water vapor detection process, the directions of flow vectors vary from optical flow to optical flow though they are located substantially at the same position on the observed world coordinate system, and points at which the flow vectors at the same coordinates on the image fluctuate in time series are recorded as flow vectors of water vapor. Such a process is performed on all optical flow vectors on the image.

Then, the recorded flow vectors of water vapor are grouped to calculate a water vapor region. This merging is specifically performed by determining if the coordinates of the starting point and the end point of the flows recorded as the flow vectors of water vapor are located within a region with a preset size, and if the coordinates are located close to each other, the flow vectors are grouped. Such a grouping process is performed on all flow vectors of water vapor on the image. An apparent motion region is recorded as, for each apparent motion region obtained by the grouping process, for example, the upper left point coordinates and the lower right point coordinates of a circumscribed rectangle; an area or an area ratio of the apparent motion region in the circumscribed rectangle; and the type of the apparent motion.

The process of setting a warning suppression region performed in step S50 will be described. In the process of setting a warning suppression region, if the circumscribed rectangle of the apparent motion region on the screen, recorded by the apparent motion determination unit, continuously exists at the same place for a predetermined period of time, the region is recorded as a warning suppression region.

If the circumscribed rectangle of the apparent motion region exists at the same place is specifically determined in such a manner that, when the upper left coordinates and the lower right coordinates of a plurality of circumscribed rectangles are obtained at time t - 1 and time t, if the overlap rate of the regions is greater than or equal to a predetermined threshold, it is determined that the circumscribed rectangles exist at the same place. When circumscribed rectangles are obtained for N + 1 images captured at different time points from time t - N to time t, if the circumscribed rectangles of a predetermined number or more of the images are determined to exist at the same place, it is determined that the circumscribed rectangles continuously exist at the same place for a time period of N + 1.

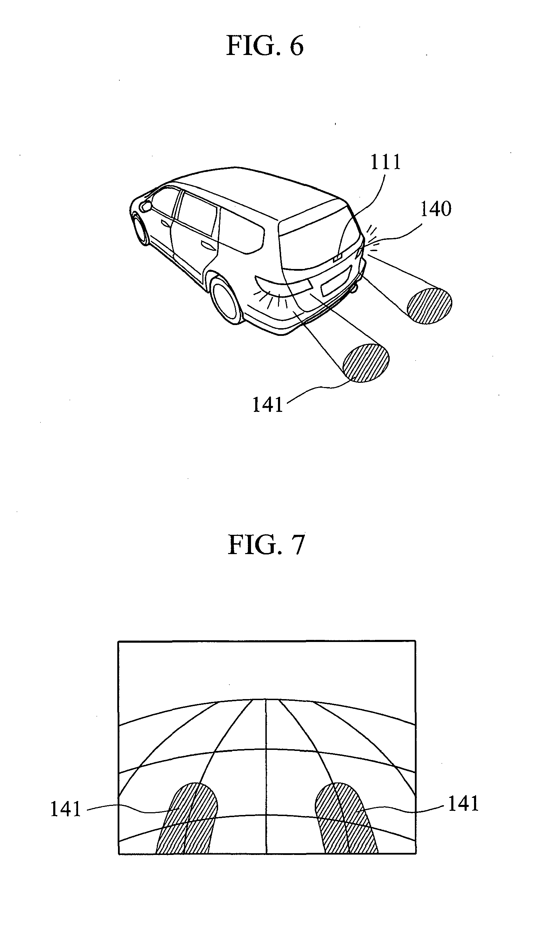

Next, a light source fluctuation that is another apparent motion will be described with reference to FIGS. 6 and 7.

FIG. 6 is a diagram representing a view in which a light source illuminates a road surface due to blinking of direction indicators, and FIG. 7 is a diagram showing a view in which the illuminated road surface is observed as an image.

When a vehicle is still and the road surface is flat, the position of the light source 140 with respect to the road surface and the projected light pattern are constant. Thus, a position 141 of a luminance change on the road surface observed with the camera 111 is also constant. Meanwhile, when a light source mounted on the still vehicle on the road surface or another vehicle blinks, a luminance change occurs in a given region on the image due to the influence of the light source fluctuation. Further, not the whole region on the road surface, but only a given region according to the shape of the light source is influenced by the light source fluctuation. Therefore, the image is split into local regions, and a time series luminance change in each of the split regions is observed.

A time series luminance change is observed as follows. First, from the luminance change pattern for when the light is turned on and off, a luminance change model is supposed that has, as parameters, a luminance increasing time t1, a maximum luminance duration time t2, a luminance dropping time t3, and a minimum luminance duration time t4. Then, such parameters are calculated.

A mean luminance value is calculated for each local region in the images acquired in time series, and is stored and accumulated in a ring buffer that has an array length corresponding to a time period longer than at least a single period (e.g., 1.5 periods). After a mean luminance value for a time period longer than 1.5 periods is stored in the ring buffer, the ring buffer is searched for a portion having a similar waveform to a luminance value sequence for the latest 0.5 period so that the period is calculated.

At this time, it is possible to, by supposing a case where the sampling rate is sufficiently not low relative to the luminance value fluctuation, generate approximate curves from a luminance value sequence for a 0.5 period, and search for similar portions between the approximate curves.

The approximate curve herein refers to a cubic curve, a quartic curve, or the like, and can be easily generated by, when a plurality of mean luminance values and their observed times are obtained, approximating a curve that passes through the time-luminance value using a least-squares method or the like.

When the phase of the thus generated approximate curve is retrieved, it becomes possible to calculate the period without the influence on the sampling interval. After the period is calculated, the maximum luminance duration time t2 and the minimum luminance duration time t4 are calculated. These are calculated by, as the luminance values in the time periods of t2 and t4 are substantially constant, calculating the mean and variance of luminance values for a predetermined period of time for the luminance value sequence included in the ring buffer, and determining that t2 and t4 are continuing if the variance is less than the threshold. T1 and t3 can be calculated from the time obtained by subtracting t2 and t4 from the whole period.

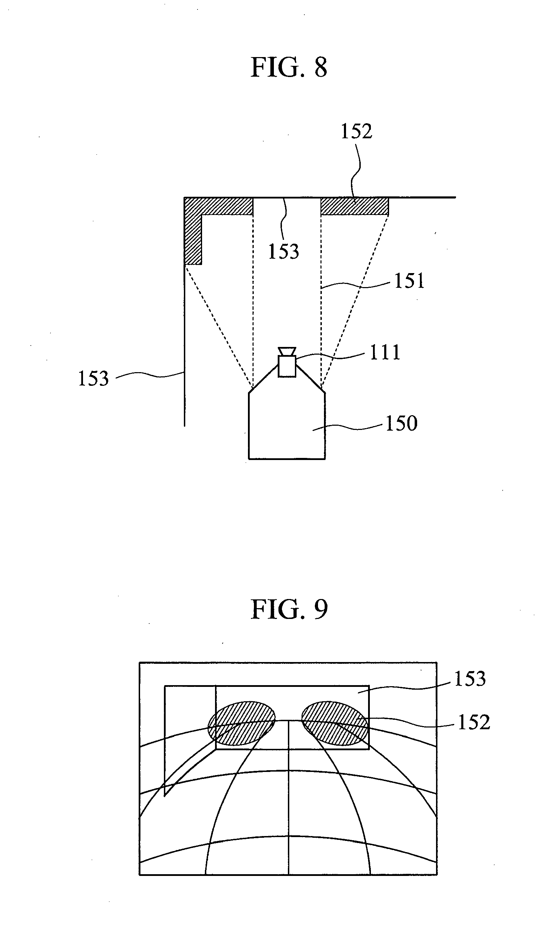

The descriptions made with reference to FIGS. 6 and 7 above are based on the premise that a road surface on which no three-dimensional object is present, or a light source mounted on a still vehicle on the road surface or another still vehicle is blinking. FIGS. 8 and 9 each show an example in which a wall is present near a vehicle, and the vehicle moves forward to approach the wall while illuminating the wall with headlights of the vehicle.

In FIG. 8, a vehicle 150 illuminates a wall 153 with light rays of the headlights. The light ray illuminated range 152 is observed as an extremely high luminance value region on the image.

This illuminated range 152 is proportional to the distance from the vehicle 150 to the wall 153, and becomes narrow as the vehicle 150 approaches the wall 153. Therefore, in the captured image in FIG. 9, an apparent motion is generated on the boundary of the illuminated range 152 and optical flows are thus observed. Thus, only when the vehicle 150 is projecting light on the field of view of the camera and the vehicle is moving along the visual axis direction of the camera , a region that has an edge within a predetermined luminance value range is extracted as an apparent motion region.

Note that the phrase "when there is an amount of movement of the light in the visual axis direction of the camera" corresponds to, when an image of a front camera is being processed, for example, a condition in which the selected position of a select lever is D (Drive) or L (Low) and a predetermined vehicle speed is detected, and a condition in which information to the effect that the wheel is rotating in the forward direction is obtained from a wheel rotation sensor, or, when an image of a rear camera is being processed, the selected position of the select lever is R (Reverse) and a pulse is obtained from a wheel speed pulse sensor. Thus, such a condition can be determined by combining the camera selection condition of the system and a vehicle sensor.

When there is an amount of movement of the light in the visual axis direction of the camera, the intensity of the mounted light source can be known from the camera selection condition. Thus, the strength of an edge to be removed set in advance is changed. Then, only an edge with such an edge strength is extracted from the input image to calculate an apparent motion region.

As described above, according to the vehicle peripheral area observation system 100 in this embodiment, an apparent motion region due to water vapor or a light source fluctuation is detected from images captured with the camera 111, and a result of detection of a moving object in the region is invalidated. Thus, a user-friendly vehicle peripheral area observation system can be provided that suppresses error warnings that would otherwise be output due to an apparent motion.

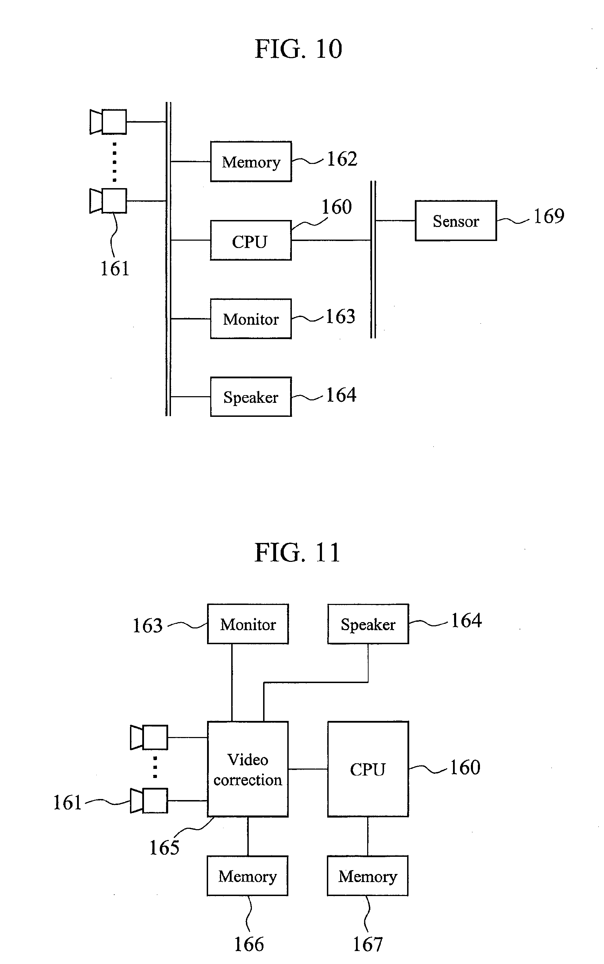

Next, a hardware configuration having such an algorithm will be described with reference to FIG. 10.

Video signals from a plurality of cameras 161 such as a front camera, a rear camera, a side camera, and an interior camera are stored in memory 162. The CPU 160, on the basis of the video signals stored in the memory 162 and sensor information from the on-vehicle sensor 169, detects a moving object and also detects an apparent motion region. Then, the CPU 160, in order to inform a user of the detection result, suppresses error warnings that would otherwise be output due to the apparent motion, selects an appropriate camera video and displays the video on the monitor 163, and also outputs a warning sound from the speaker 164.

It is also possible to, in terms of entrusting final checking to a user, display the result of detection of the moving object as it is on the monitor 163 regardless of the result of detection of the apparent motion region, and suppress only a warning sound from the speaker 164 in accordance with the result of detection of the apparent motion region.

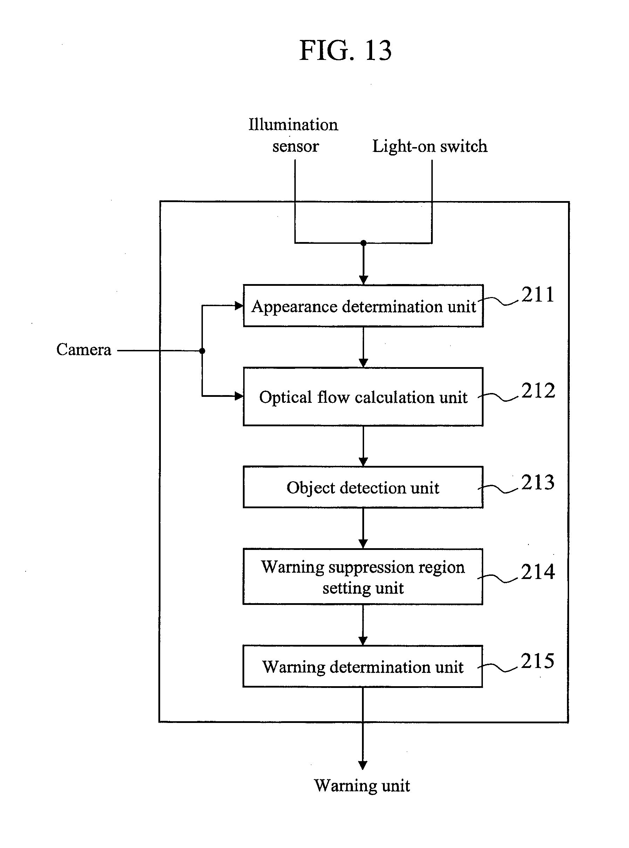

Next, description in terms of a flow of information will be made with reference to FIG. 13.

An appearance determination unit 211, using as inputs information from sensors that indicate the engine conditions, such as an illumination sensor, an ambient temperature sensor, and an exhaust gas temperature sensor/a cooling water temperature sensor (none of them are shown), changes parameters for a water vapor detection process or switches whether to implement the water vapor detection process or not. In addition, the appearance determination unit 211 switches whether to implement a process of determining the presence of an apparent motion due to a light source fluctuation or not, using as an input a signal from an illumination sensor or a signal indicating an instruction to turn on a lighting device. Further, the appearance determination unit 211 calculates a movement of a background in accordance with a movement of the vehicle, using vehicle motion information.

An optical flow calculation unit 212 calculates a motion region from the screen using a camera video as an input, and removes the movement of the background calculated by the appearance determination unit 211. Then, an object detection unit 213 extracts a moving object region from the optical flows with the suppressed background movement.

A warning suppression region setting unit 214 holds a water vapor region obtained by the appearance determination unit 211, for example. A warning determination unit 215 suppresses notification when a moving object region is detected in the water vapor region.

### [Second Embodiment]

Next, a second embodiment will be described with reference to FIG. 11.

An overall flow of a process in this embodiment is substantially the same as that in the first embodiment. Thus, only portions that differ from those in the first embodiment will be described. FIG. 11 is a diagram illustrating a hardware configuration of the second embodiment.

In the second embodiment, a configuration is provided in which a video correction unit 165 receives a video from the camera 161. The video correction unit 165 performs overhead view conversion on each of videos from cameras mounted on the front, rear, right, and left of the vehicle to merge the videos, thereby generating an overhead view monitor image. The video correction unit 165 then transmits a video including the thus generated overhead view monitor image to the CPU 160. The CPU 160 detects an apparent motion or detects a moving object.

Detection of an apparent motion from the overhead view monitor image is substantially the same as detection of an apparent motion from a video of a typical camera, that is, a through-the-lens image. A result of image recognition executed by the CPU 160 is transmitted to the video correction unit 165.

Then, the processing result is drawn on the video including the overhead view monitor image in an overlapped manner in the video correction unit 165, and is output to the monitor 163. In addition, a process of outputting a warning sound from the speaker 164 is also performed.

As described in the first embodiment, it is also possible to, in terms of entrusting final checking to a user, display the result of detection of the moving object as it is on the monitor 163 regardless of the result of detection of the apparent motion region, and suppress only a warning sound from the speaker 164 in accordance with the result of detection of the apparent motion region.

Further, by correcting lens distortion, for example, it also becomes possible to calculate optical flows more appropriately. Thus, it is expected that the accuracy of detection of a motion in a small region will increase in a region where a distortion is likely to be large like an end of the screen, in particular.

### [Third Embodiment]

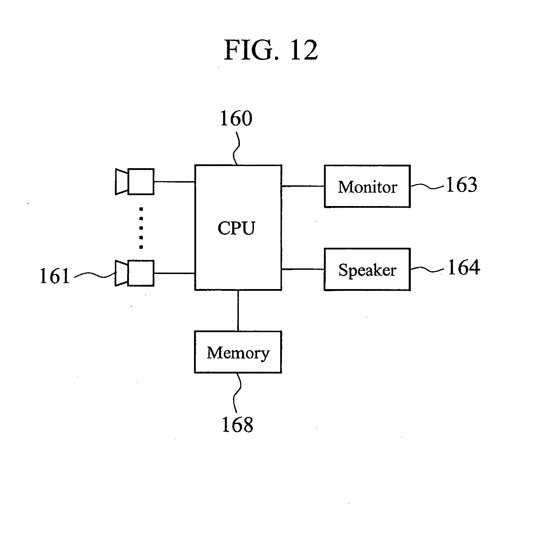

Next, a third embodiment will be described with reference to FIG. 12.

An overall flow of a process in this embodiment is substantially the same as that in the first embodiment. Thus, only portions that differ from those in the first embodiment will be described. FIG. 12 is a diagram illustrating a hardware configuration of the third embodiment.

This embodiment differs from the first embodiment in that the CPU 160 directly receives an input of the camera 161. Accordingly, advantages can be provided in that a load on the bus can be reduced and the size of the system can be reduced.

### Reference signs list

- 100:: Vehicle peripheral area observation system
- 101:: Captured image acquisition unit
- 102:: Optical flow calculation unit
- 103:: Brightness measurement unit
- 104:: Moving object detection unit
- 105:: appearance determination unit
- 106:: warning suppression region setting unit
- 107:: warning control unit
- 110:: ECU
- 111:: On-vehicle camera

## Claims

1. A vehicle peripheral area observation system for observing a peripheral area of a vehicle on the basis of a plurality of images captured with an on-vehicle camera (111) at predetermined time intervals, the system comprising:
an image acquisition unit configured to acquire the plurality of images;
a moving object detection unit (104) configured to detect a moving object on the basis of the plurality of images; and
an appearance determination unit (105) configured to determine if the moving object results from detection of an apparent motion on the basis of motion information of the moving object and luminance information; **characterized by** further comprising: and
a warning suppression region setting unit (106) configured to set a warning suppression region in which a region where the moving object determined to result from detection of the apparent motion is present is masked,
a warning control unit (107) configured to perform warning control on the basis of the warning suppression region and a result of detection of the moving object
a brightness measurement unit (103) configured to determine if an environment around the vehicle is light or dark,
wherein the appearance determination unit (105) changes a threshold for the mean or the variance of the luminance values in accordance with a result of determination of if the environment is light or dark.

2. The vehicle peripheral area observation system according to claim 1, further comprising:
an optical flow calculation unit (102) configured to calculate optical flows on the basis of the plurality of images,
wherein the appearance determination unit (105) uses as the motion information a variance of vector components of the optical flows in a predetermined region.

3. The vehicle peripheral area observation system according to claim 1 or 2, wherein the appearance determination unit (105) uses as the luminance information at least one of a mean or a variance of luminance values in a predetermined region of each of the plurality of images.

4. The vehicle peripheral area observation system according to claim 1, wherein the appearance determination unit (105) includes
a low contrast region determination unit (311) configured to, when the environment around the vehicle is determined to be light by the brightness measurement unit (103), output as a low contrast region a region in which the variance of the luminance values is low, and, when the environment around the vehicle is determined to be dark, output as a low contrast region a region in which the mean of the luminance values is high, and
a water vapor determination unit (312) configured to determine if the water vapor has been erroneously detected as a moving object on the basis of the low contrast region and the optical flows.

5. The vehicle peripheral area observation system according to claim 4, wherein the water vapor determination unit (312) is configured to determine that the water vapor has been erroneously detected as a moving object when the environment around the vehicle is determined to be dark by the brightness measurement unit (103) and optical flows are output only around the region in which the mean of the luminance values is high.

6. The vehicle peripheral area observation system according to claim 4 or 5, wherein the water vapor determination unit (312) determines that the water vapor has been erroneously detected as a moving object when the environment around the vehicle is determined to be light by the brightness measurement unit (103) and optical flows are output only around the region in which the variance of the luminance values is low.

7. The vehicle peripheral area observation system according to at least one of claims 1 to 6, wherein
the appearance determination unit (105) includes a light source fluctuation determination unit (313) configured to determine that a light source fluctuation is generated due to blinking of a light source when luminance values of a plurality of local regions set in the images follow a predetermined pattern with the passage of time, and
the appearance determination unit (105) is configured to, when it is determined by the light source fluctuation determination unit (313) that a light source fluctuation is generated, determine that the moving object results from detection of an apparent motion due to the blinking of the light source.

## Patentansprüche

1. Fahrzeugumgebungsbereich-Beobachtungssystem zum Beobachten eines Umgebungsbereichs eines Fahrzeugs anhand mehrerer Bilder, die mit einer fahrzeuginternen Kamera (111) in vorgegebenen Zeitintervallen aufgenommen werden, wobei das System umfasst:
eine Bilderfassungseinheit, die konfiguriert ist, die mehreren Bilder zu erfassen;
eine Einheit (104) zum Detektieren eines sich bewegenden Objekts, die konfiguriert ist, ein sich bewegendes Objekt anhand der mehreren Bilder zu detektieren; und
eine Erscheinungsbestimmungseinheit (105), die konfiguriert ist, anhand von Bewegungsinformationen des sich bewegenden Objekts und von Leuchtdichteinformationen zu bestimmen, ob das sich bewegende Objekt aus der Detektion einer erscheinenden Bewegung resultiert; **dadurch gekennzeichnet, dass** es ferner umfasst:
eine Warnunterdrückungsbereich-Einstelleinheit (106), die konfiguriert ist, einen Warnunterdrückungsbereich einzustellen, in dem ein Bereich, in dem das sich bewegende Objekt, für das bestimmt wird, dass es aus der Detektion der erscheinenden Bewegung resultiert, vorhanden ist, maskiert ist,
eine Warnsteuereinheit (107), die konfiguriert ist, eine Warnsteuerung anhand des Warnunterdrückungsbereichs und eines Ergebnisses der Detektion des sich bewegenden Objekts auszuführen, und
eine Helligkeitsmesseinheit (103), die konfiguriert ist, zu bestimmen, ob eine Umgebung um das Fahrzeug hell oder dunkel ist,
wobei die Erscheinungsbestimmungseinheit (105) einen Schwellenwert für den Mittelwert oder die Varianz der Leuchtdichtewerte in Übereinstimmung mit einem Ergebnis der Bestimmung, ob die Umgebung hell oder dunkel ist, ändert.

2. Fahrzeugumgebungsbereich=Beobachtungssystem nach Anspruch 1, das ferner umfasst:
eine Strahlungsleistungs-Berechnungseinheit (102), die konfiguriert ist, Strahlungsleistungen anhand der mehreren Bilder zu berechnen,
wobei die Erscheinungsbestimmungseinheit (105) eine Varianz von Vektorkomponenten der Strahlungsleistungen in einem vorgegebenen Bereich als die Bewegungsinformationen verwendet.

3. Fahrzeugumgebungsbereich-Beobachtungssystem nach Anspruch 1 oder 2, wobei die Erscheinungsbestimmungseinheit (105) einen Mittelwert und/oder eine Varianz von Leuchtdichtewerten in einem vorgegebenen Bereich jedes der mehreren Bilder als die Leuchtdichteinformationen verwendet.

4. Fahrzeugumgebungsbereich-Beobachtungssystem nach Anspruch 1, wobei die Erscheinungsbestimmungseinheit (105) umfasst:
eine Einheit (311) zum Bestimmen eines Bereichs mit niedrigem Kontrast, die konfiguriert ist, dann, wenn die Umgebung um das Fahrzeug durch die Helligkeitsmesseinheit (103) als hell bestimmt wird, einen Bereich, in dem die Varianz der Leuchtdichtewerte niedrig ist, als einen Bereich mit niedrigem Kontrast ausgibt, und dann, wenn die Umgebung um das Fahrzeug als dunkel bestimmt wird, einen Bereich, in dem der.Mittelwert der Leuchtdichtewerte hoch ist, als einen Bereich mit niedrigem Kontrast ausgibt, und
eine Wasserdampf-Bestimmungseinheit (312), die konfiguriert ist, anhand des Bereichs mit niedrigem Kontrast und der Strahlungsleistungen zu bestimmen, ob der Wasserdampf fehlerhaft als ein sich bewegendes Objekt bestimmt worden ist.

5. Fahrzeugumgebungsbereich-Beobachtungssystem nach Anspruch 4, wobei die Wasserdampf-Bestimmungseinheit (312) konfiguriert ist, zu bestimmen, dass der Wasserdampf fehlerhaft als ein sich bewegendes Objekt detektiert worden ist, wenn die Umgebung um das Fahrzeug durch die Helligkeitsmesseinheit (103) als dunkel bestimmt wird und Strahlungsleistungen nur um den Bereich, in dem der Mittelwert der Leuchtdichtewerte hoch ist, ausgegeben werden.

6. Fahrzeugumgebungsbereich-Beobachtungssystem nach Anspruch 4 oder 5, wobei die Wasserdampf-Bestimmungseinheit (312) bestimmt, dass der Wasserdampf fehlerhaft als ein sich bewegendes Objekt detektiert worden ist, wenn die Umgebung um das Fahrzeug durch die Helligkeitsmesseinheit (103) als hell bestimmt wird und Strahlungsleistungen nur um den Bereich, in dem die Varianz der Leuchtdichtewerte niedrig ist, ausgegeben werden.

7. Fahrzeugumgebungsbereich-Beobachtungssystem nach wenigstens einem der Ansprüche 1 bis 6, wobei
die Erscheinungsbestimmungseinheit (105) eine Lichtquellenschwankungs-Bestimmungseinheit (313) umfasst, die konfiguriert ist, eine durch Blinken einer Lichtquelle erzeugte Lichtquellenschwankung zu bestimmen, wenn Leuchtdichtewerte mehrerer räumlich begrenzter Bereiche, die in den Bildern eingestellt sind, im Verlauf der Zeit einem vorgegebenen Muster folgen, und
die Erscheinungsbestimmungseinheit (105) konfiguriert ist, dann, wenn durch die Lichtquellenschwankungs-Bestimmungseinheit (313) bestimmt wird, dass eine Lichtquellenschwankung erzeugt wird, zu bestimmen, dass das sich bewegende Objekt aus der Detektion einer erscheinenden Bewegung, die durch das Blinken der Lichtquelle bedingt ist, resultiert.

## Revendications

1. Système d'observation de la zone périphérique d'un véhicule pour observer une zone périphérique d'un véhicule sur la base d'une pluralité d'images capturées avec une caméra embarquée (111) à intervalles temporels prédéterminés, le système comprenant :
une unité d'acquisition d'images configurée pour acquérir la pluralité d'images ;
une unité de détection d'objet en mouvement (104) configurée pour détecter un objet en mouvement sur la base de la pluralité d'images ; et
une unité de détermination d'apparence (105) configurée pour déterminer si l'objet en mouvement résulte de la détection d'un mouvement apparent sur la base d'une information de mouvement de l'objet en mouvement et d'une information de luminance ;
**caractérisé en ce qu'**il comprend en outre
une unité de fixation de région de suppression d'avertissement (106) configurée pour fixer une région de suppression d'avertissement dans laquelle une région dans laquelle l'objet en mouvement déterminé comme résultant de la détection du mouvement apparent est présent est masquée,
une unité de contrôle d'avertissement (107) configurée pour exécuter un contrôle d'avertissement sur la base de la région de suppression d'avertissement et d'un résultat de détection de l'objet en mouvement, et
une unité de mesure de brillance (103) configurée pour déterminer si un environnement autour du véhicule est clair ou sombre,
dans lequel l'unité de détermination d'apparence (105) change un seuil pour la moyenne ou la variance des valeurs de luminance en accord avec un résultat de détermination quant à savoir si l'environnement est clair ou sombre.

2. Système d'observation de la zone périphérique d'un véhicule selon la revendication 1, comprenant en outre :
une unité de calcul de flux optiques (102) configurée pour calculer des flux optiques sur la base de la pluralité d'images,
dans lequel l'unité de détermination d'apparence (105) utilise à titre d'information de mouvement une variance des composantes vectorielles des flux optiques dans une région prédéterminée.

3. Système d'observation de la zone périphérique d'un véhicule selon la revendication 1 ou 2, dans lequel l'unité de détermination d'apparence (105) utilise à titre d'information de luminance au moins une valeur parmi la moyenne ou la variance des valeurs de luminance dans une région prédéterminée de chacune de la pluralité d'images.

4. Système d'observation de la zone périphérique d'un véhicule selon la revendication 1, dans lequel l'unité de détermination d'apparence (105) inclut
une unité de détermination de région à faible contraste (311) configurée pour, quand il a été déterminé que l'environnement autour du véhicule est clair par l'unité de mesure de brillance (103), délivrer à titre de région à faible contraste une région dans laquelle la variance des valeurs de luminance est faible et, quand il a été déterminé que l'environnement autour du véhicule est sombre, délivrer à titre de région à faible contraste une région dans laquelle la moyenne des valeurs de luminance est élevée, et
une unité de détermination de vapeur d'eau (312) configurée pour déterminer si la vapeur d'eau a été détectée par erreur à titre d'objet en mouvement sur la base de la région à faible contraste et des flux optiques.

5. Système d'observation de la zone périphérique d'un véhicule selon la revendication 4, dans lequel l'unité de détermination de vapeur d'eau (312) est configurée pour déterminer que la vapeur d'eau a été détectée par erreur à titre d'objet en mouvement quand il a été déterminé que l'environnement autour du véhicule est sombre par l'unité de mesure de luminance (103) et que des flux optiques sont délivrés uniquement autour de la région dans laquelle la moyenne des valeurs de luminance est élevée.

6. Système d'observation de la zone périphérique d'un véhicule selon la revendication 4 ou 5, dans lequel l'unité de détermination de vapeur d'eau (312) détermine que la vapeur d'eau a été détectée par erreur à titre d'objet en mouvement quand il a été déterminé que l'environnement autour du véhicule est clair par l'unité de mesure de brillance (103)- et que des flux optiques sont délivrés uniquement autour de la région dans laquelle la variance des valeurs de luminance est faible.

7. Système d'observation de la zone périphérique d'un véhicule selon l'une au moins des revendications 1 à 6, dans lequel :
l'unité de détermination d'apparence (105) inclut une unité de détermination de fluctuation de source lumineuse (313) configurée pour déterminer qu'une fluctuation de source lumineuse est générée en raison d'un clignotement d'une source lumineuse quand des valeurs de luminance d'une pluralité de régions locales fixées dans les images suivent un motif prédéterminé au cours du temps, et
l'unité de détermination d'apparence (105) est configurée pour, quand il est déterminé par l'unité de détermination de fluctuation de source lumineuse (313) qu'une fluctuation de source lumineuse est générée, déterminer que l'objet en mouvement résulte de la détection d'un mouvement apparent en raison du clignotement de la source lumineuse.
